# EUROPEAN PATENT APPLICATION

(11) **EP 3 893 160 A1**
(43) Date of publication of application: **13.10.2021**
(21) Application number: 20168681.3
(22) Date of filing: 08.04.2020
(51) Int. Cl.: G06N 3/04, G06N 3/08, G06N 5/04

(54) **SYSTEM, APPARATUS AND METHOD FOR EVALUATING NEURAL NETWORKS**

(71) Applicant: Siemens Aktiengesellschaft, 80333 München (DE)
(72) Inventor: Bonner, Maria, 90491 Nürnberg (DE); Kupriyanov, Olexiy, 90765 Fürth (DE)

(57) **Abstract**

System, apparatus and method for evaluating neural networks associable with an industrial environment (140) is disclosed. The neural networks are configurable to enable autonomous operations in the industrial environment (140). The method comprising generating explanation (134) of the neural networks, wherein the neural networks generate predictions based on the operations in the industrial environment (140); wherein the explanation (134) comprises at least one of sensitivities, heatmaps and highlights of the predictions generated by the neural networks; generating objective coefficients for the neural networks based on predefined performance indicators of the explanation (134); evaluating the neural networks based on comparison of the objective explanation (134) coefficients; and determining a follow-up operation for the industrial environment (140) based on the evaluation of the neural networks.

## Description

The present invention relates to evaluating neural networks, particularly neural networks that are employed in industrial applications and are associable with an industrial environment.

Machine learning methods such as neural networks are widely used for industrial applications, for example in image classification for autonomous driving. Unfortunately, the accuracy of the machine learning methods may not be suitable to use the methods directly, especially in safe-critical industrial environments. The accuracy may be hidden due to the black box nature of the machine learning methods. Accordingly, verification and analysis of machine learning methods is hard to accomplish.

Existing verification techniques allow to verify may be limited based on size of the neural networks or the type of activation functions used by the neural networks. Due to the multi-layer nonlinear structure, the neural networks are not transparent, i.e. it is hard to analyze the behavior of the neural networks given a new unseen data. In safety critical systems, such as autonomous driving environments, the inability to analyze the behavior of an autonomous system and the underlying machine learning methods may result in inability to create and adhere to safety standards.

Further, without standardized verification techniques comparison of multiple neural networks and their behavior may be prohibitively complicated. An existing technique to compare the neural networks is accuracy measurement. Since the neural networks can behave unpredictably on the new data, the accuracy measurement technique may not be considered as reliable.

Therefore, there exists a need for an evaluation method which would guarantee the quality of the neural networks. Accordingly, the systems, devices and methods for evaluating neural networks used in industrial applications may benefit from improvements.

The objective of the present invention is to provide effective verification and analysis of the neural networks to enable comparison and benchmarking.

In an example, a method for evaluating neural networks associable with an industrial environment is disclosed. The neural networks are configurable to enable autonomous operations in the industrial environment. The method comprising generating explanation for (associated with prediction) the neural networks, wherein the neural networks generate predictions based on the operations in the industrial environment; wherein the explanation comprises at least one of sensitivities, heatmaps and highlights of the predictions generated by the neural networks; generating objective coefficients for the neural networks based on predefined performance indicators of the explanation; evaluating the neural networks based on comparison of the objective explanation coefficients; and determining a follow-up operation for the industrial environment based on the evaluation of the neural networks.

In another example, an apparatus for evaluating neural networks associable with an industrial environment is disclosed. The apparatus comprising a firmware comprising an explanation module configured to generate explanation for predictions generated using the neural networks; an analysis module configured to analyze the explanation based on performance indicators associated with the industrial environment; and an evaluation module configured to evaluate the neural networks using the explanation and the performance indicators.

In yet another example, a system for evaluating neural networks associable with an industrial environment, the system comprising a server configured to coordinate execution of one or more the method steps disclosed herein to be executable in a distributed computing environment.

A further example may include a non-transitory computer readable medium encoded with executable instructions (such as a software component on a storage device) that when executed, causes at least one processor to carry out this described method.

Before describing the suggested convention in more detail, it should be understood that various definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments. It should also be appreciated that features explained in the context of the suggested method may also be comprised by the suggested system by appropriately configuring and adapting the system and vice versa.

The industrial environment refers to a facility for manufacture, production that may be semi or completely automated. For example, industrial automation environment, laboratory industrial environment, building industrial environment and the like. Further, according to the present invention, industrial environment may include a combination of one or more industrial automation environments, laboratory industrial environments, building industrial environments.

The industrial environment has multiple of data that may be generated within the environment or may be associated with the environment. For example, sensor data may be generated within the industrial environment and the control data may be associated with the environment even if it is not generated within the environment. In another example, sensor data may be synthesized to reflect one or more operating conditions of the industrial environment. The sensor data may be analyzed using neural networks to enable performance of one or more operations autonomously. Such operations may include triggering a control signal to one or more actuators in the industrial environment.

For example, the industrial environment may be an autonomous diving environment that includes multiple sensing and actuating units which are used for navigation. The autonomous driving environment also includes controllers that execute or enable execution of the neural networks that process the sensor data to define the navigation path. It may be necessary for the controllers to recognize and react to an increased number of complex scenarios. The controller may classify information associated with the autonomous driving environment into safety critical information. The classification of information may be performed by the neural networks. Classification of the information as safety critical may trigger autonomous operations by the actuating units. The present invention advantageously evaluates the accuracy of the neural networks and thereby ensuring accurate classification.

In another example, the industrial environment may be a building automation environment that includes multiple lighting, heating and ventilation units and associated sensing units. The building automation environment may include multiple controllers that adapt the lighting, heating and ventilation based on occupancy of the building. The neural network used by the controllers may enable determination of the occupancy and occupant preferences for the lighting heating and ventilation. Using the present invention, the accuracy of the neural networks to determine occupant preferences can be evaluated.

In an embodiment, the method may include defining testcases associated with the industrial environment to evaluate the neural networks. The method may also include receiving the test-cases associated with the industrial environment from a test-case database. The test-cases are input data to the neural networks and include an image data, an audio data, a textual data and/or a video data-stream that are input to the neural networks and an explanation module to generate the explanation. For example, test-cases include images from an environment the autonomous driving assistance system needs to navigate. The environment may include living objects, animate objects and inanimate objects that need to be navigated. In another example, test-cases include camera feed from the buildings in the building automation environment. The camera feed may be used to determine occupancy in the buildings. In yet another example, test-cases include sensor data from a temperature sensor is in the buildings.

The method may include providing driving testcases to neural networks employed in the autonomous driving assistance systems to predict driving environment of the autonomous vehicles. Accordingly, the present invention considers existing test-cases used to train the neural networks employed in the autonomous driving assistance systems. Such test-cases may be standard. Therefore, the present invention may be used to evaluate multiple neural networks across organizations to set up industries specific standards for autonomous driving systems.

As used herein, the explanation refers to a result of the analysis of the input data and their impact on the predictions generated by the neural networks. The explanations can be in the form of heat maps, highlights sensitivities that explain which aspects of the input data and mostly contributed to the predictions. In an embodiment, the explanation may be generated through back propagation of the neural networks.

To generate the explanations, the method may include determining a set of features of the input data and associated contribution to the prediction generated by the neural networks. The method may further include determining significant features from the set of features based on higher contribution to the predictions. For example, the method may include determining significant features in the driving test cases that have contributed to the predicted driving environment generated by the neural networks employed by the autonomous driving assistance system. In the present invention the significant features may be determined based on sensitivity analysis, heat map generation and/or highlight generation. A combination of one or more of the significant features is used to generate the explanation.

The generated explanation for the predictions of the neural networks may be in multiple formats such as, an image, a plotted graph and the like. In an embodiment, the explanation may include a visual representation of the significant features. For example, a pixel map representing pixel values identified from the input data that have contributed to the predictions generated by the neural networks. In another embodiment, the method may include simulating operation of the neural networks using the at least one neural network by inputting a section of the input data to the at least one neural network; and generating the explanation of the neural networks based on the simulation. In other words, the explanation may be generated using a lower order neural network that analyses a section of the input data to determine the behavior of the neural networks. The present invention advantageously analyses the behavior of the neural networks by perturbing the input data and understanding how the predictions change.

The generation of the explanation is advantageously combined with objective analysis in the present invention. In an embodiment, the objective analysis is image analysis performed on the explanation. The image analysis may be used for evaluating the explanation. The method may include determining the performance indicators associated with the industrial environment to evaluate the explanation of the neural networks. In an embodiment, the performance indicators may include accuracy of the prediction generated by the neural networks in comparison with the input data. For example, the objective coefficients may include blur coefficients and/or pixel values of the visual explanation. The image analysis technique may be used to define a threshold blur coefficient/pixel value (predetermined performance indicators).

The method may include generating visual representations of the significant features for each of the neural networks and determining the blur coefficient and/or pixel values for the visual representations using image analysis techniques. Further, the method may include comparing the visual representations based on the blur coefficient and/or pixel values. Furthermore, the method may include comparing the blur coefficient and the pixel value with the threshold blur coefficient/pixel value.

The technical effect of objective analysis of the explanation is that a large number of neural networks may be evaluated irrespective of their size and activation methodology. Further, the objective analysis enables an automatic evaluation of the neural network without human intervention. Therefore, the present invention avoids the necessity of an expert's subjective analysis of the explanation. Accordingly, the objectivity enables setting up of standards of using neural networks in safety critical systems. Furthermore, in cases where a predefined industrial standard exists the present invention evaluates the neural networks to confirm whether the same adheres to the predefined standard.

The method may include determining what follow-up operation needs to be performed to mitigate deficiencies in the neural networks determined from the evaluation. The follow-up operation may be to identify deficiency in performance of the autonomous operations in the industrial environment. Accordingly, the method may include identifying the deficiency in performance. In furtherance, the method may include generating a new neural network version to mitigate the deficiency in performance.

Other follow-up operations may include confirming whether the neural networks adhere to the predefined standard. The method may include evaluating the neural networks based on the analysis of the quality of the significant features to confirm whether the neural networks adhere to a predefined standard of accuracy in analyzing the driving testcases.

The method may further include evaluating the neural networks based on the analysis of the significant features to identify a suitable neural network among the neural networks, wherein the suitable neural network is capable of analyzing the driving testcases with a higher order of accuracy. The present invention is able to advantageously rank the evaluated neural networks based on their accuracy.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a block diagram of a system and apparatus for evaluating neural networks associated with an industrial environment, according to an embodiment of the present invention;
- FIG 2: illustrates a flow diagram indicating method steps of a method for evaluating neural networks in an industrial environment, according to an embodiment of the present invention; and
- FIG 3: illustrates flow diagrams indicating method steps of methods for evaluating one or more neural networks associated with an autonomous driving assistance system, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

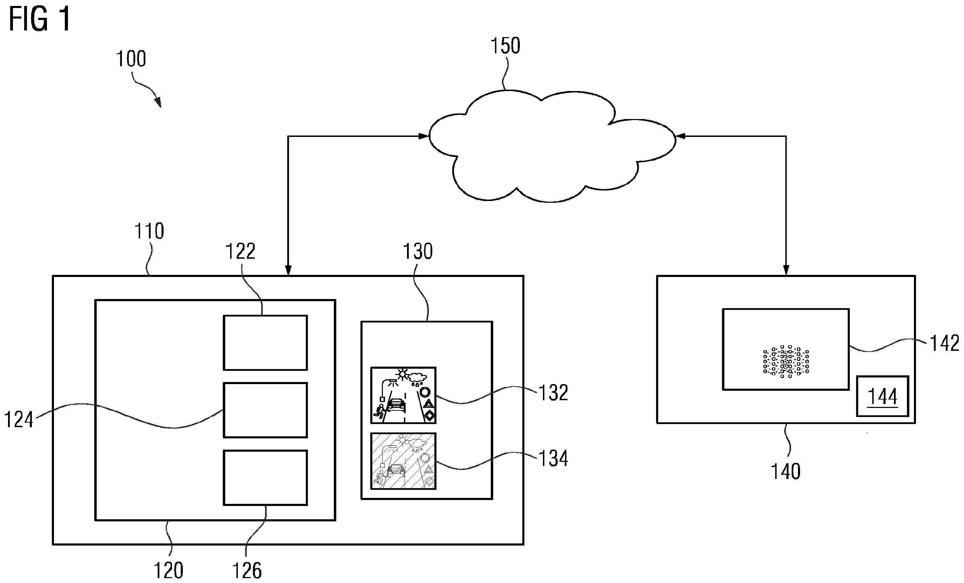

FIG 1 illustrates a block diagram of a system 100 and apparatus 110 for evaluating neural networks associated with an industrial environment 140, according to an embodiment of the present invention. The system 100 includes a cloud and/or edge computing platform 150 configured to communicate with the apparatus 110 and the industrial environment 140. The cloud/edge computing platform 150 may be configured to execute the functions of the apparatus 110 in an embodiment.

As used herein, "computing environment" refers to a processing environment comprising configurable computing physical and logical resources, for example, networks, servers, storage, applications, services, etc., and data distributed over a network. The computing platform 150 is configured with a memory and a processor to store and execute software instructions executed by the apparatus 110.

In FIG 1 the industrial environment 140 relates to autonomous driving assistance environment. Particularly, the industrial environment 140 is an autonomous vehicle 140. The autonomous vehicle 140 includes a controller 142. The autonomous vehicle 140 also includes sensing and actuating units 144. Example sensing units include a radar light detection and ranging sensors, vision sensors, proximity sensors et cetera. Example actuating units include a steering unit, a braking unit et cetera.

The controller 142 includes a firmware module that is a combination of hardware and memory capable of executing and storing software instructions. As used herein, "memory" refers to all computer readable media for example nonvolatile media, volatile media, and transmission media except for transitory, propagating signal. The memory stores the computer program instructions defined by software components such as modules. These modules may include an event detection module, a driving environment module et cetera. The modules may be provided with neural networks or may be able to execute the neural networks.

The sensing units generate sensor data indicating environment of the autonomous vehicle 140. For example, the sensor data indicates position, location of the autonomous vehicle 140 and objects in the environment 132. In an embodiment, the sensor data may be pre-recorded or taken from another autonomous vehicle not shown in FIG 1. The controller 142 is communicatively coupled to the sensing units and configured to generate control signals that control operation of the autonomous vehicle using the actuating units.

For example, the controller 142 is configured to identify safety critical features in the sensor data reflecting the environment of the autonomous vehicle 140. The safety critical components may include the sensor data that are critical to the safety of the environment 132 and the autonomous vehicle 140. The controller 142 may further be configured to generate emergency control signals to control operation of the autonomous vehicle 140 based on the safety critical features.

The neural networks may be used to generate the control signals or to enable generation of the control signals by the controller 142. As indicated above, the control signals may be generated to ensure safety of the autonomous vehicle 140 and/or the environment 132. Therefore, it is advantageous to evaluate the neural networks used to generate the control signals.

The apparatus 110 is configured to evaluate the neural networks associated with the autonomous vehicle 140. The apparatus 110 includes a firmware module 120 and a display unit 130. As used herein the firmware module 120 refers to the capable of executing and storing software instructions defined by modules for example an explanation module 122, an analysis module 124, and an evaluation module 126. The display unit 130 may be an interactive display unit configured with a Graphical User Interface (GUI).

The explanation module 122 is configured to generate explanation for predictions generated using the neural networks. Example predictions generated using the neural networks include predicted model of the environment 132 around the autonomous vehicle 140. Another example of the predictions is classification of sensor data as critical to the safety of the autonomous vehicle 140. As used herein, the explanation 134 refers to an analysis of the predictions generated by networks based on sensitivity analysis, heat map generation and/or highlight generation. The display unit 130 is configured to display the environment 132 and the explanation 134.

The present invention advantageously avoids human analysis of the explanation 134 is and instead allows automated objective analysis using the analysis module 124. The combination of generation of the explanation 134 and the objective analysis enables a standardized evaluation method to determine accuracy of the neural networks.

The analysis module 124 is configured to analyze the explanation based on performance indicators associated with the autonomous vehicle 140. In an embodiment, the performance indicators are associated with accuracy of the predicted environmental model. For example, the performance indicators include the number of objects expected to be recognized in the environment 132, accuracy of classification of the objects, accuracy of visual reproduction of the objects et cetera. As used herein "objects" refers to living objects, animate and inanimate objects in the environment 132 such as pedestrians, trees, moving/parked vehicles et cetera.

The evaluation module 126 configured to evaluate the neural networks using the explanation and the performance indicators. For example, the neural networks may be different versions of a given neural network. In an embodiment, the evaluation module 126 compares a first explanation of a first neural network among the neural networks with a second of a second neural network among the neural networks. The comparison of the first explanation with the second explanation is performed based on the performance indicators. For example, the first explanation indicates three objects that have been recognized in the environment 132 while the second explanation indicates three objects with a lower blur coefficient in the visual reproduction of the objects. The evaluation module 126 accordingly determines that the second neural network is more accurate is compared to the first neural network.

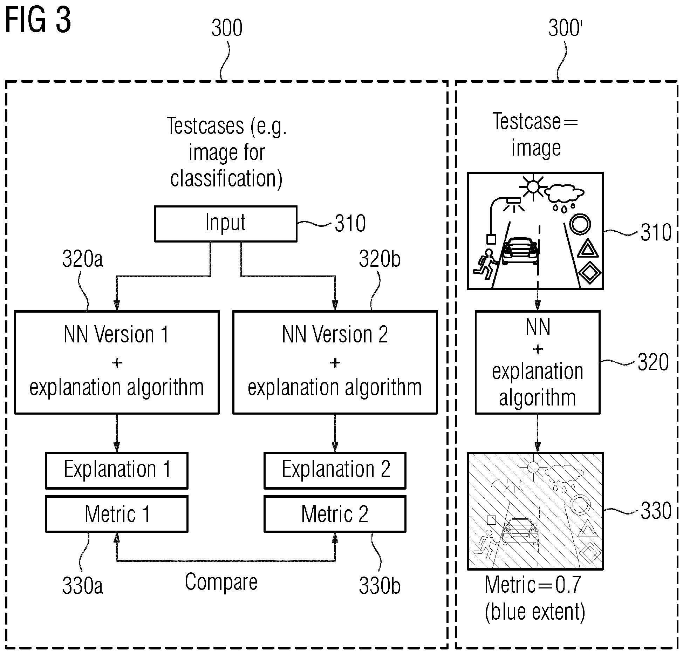

The detailed operation of the apparatus 110 is described hereinafter with reference to the method illustrated in FIG 3.

FIG 3 illustrates flow diagrams indicating method steps of methods 300 and 300' for evaluating one or more neural networks associated with an autonomous vehicle 140, according to an embodiment of the present invention. A person skilled in the art would appreciate that the methods 300 and 300' relate to the same method with autonomous vehicle 140 as a practical example. Specifically, the flow diagram 300' relates to a condition where there are two versions of the neural network NNVER1 and NNVER2.

The methods 300 and 300' begin at step 310 with the input of test-cases to the neural networks NN, NNVER 1 and NNVER 2. In the present example, the testcases include at least one image for classification.

At step 320, the neural network NN generates predicted classification of the image input at step 310. Similarly, at step 320a and step 320b, NNVER 1 and NNVER 2 generate predicted classifications. Further, at steps 320, 320a and 320b, explanation is generated based on the predicted classification. For example, the explanation summarizes where the NN, NNVER1 and NNVER2 analysis the image to generate the predictions. The explanation is a highlighted representation of the objects classified by the predicted classification with respect to the input image. In an embodiment, the explanation for the NN, NNVER1 and NNVER 2 may be generated using classifier or regressor algorithms, such as Local interpretable model-agnostic explanations (LIME) algorithm, SP-LIME and further extensions of the LIME algorithm.

At step 330, the generated explanation is analyzed using image analysis techniques. For example, in the area of object recognition the explanation has to highlight important features of detected objects. Highlight of the NN is objective, when non-random criteria are used to evaluate accuracy of the recognition. Particularly, in the present example blur coefficient and pixel value is determined from the explanation. The combination of the blur coefficient and the pixel value analysis results in a metric, such as 0.7 that ranks the NN. Similarly, at step 330a and 330b, the explanation associated with NNVER 1 and NNVER 2 are analyzed to generate Metric 1 and Metric 2. The Metric 1 and Metric 2 are compared to determine which version among NNVER 1 and NNVER 2 is more accurate.

The method may include determining what follow-up operation needs to be performed to mitigate deficiencies in the neural networks NN, NNVER1 and NNVER2 determined from the evaluation. For example, one of the neural networks NN, NNVER1 and NNVER2 that generates comparatively more blurred highlight is considered to be worse. Further, the method may include confirming whether the neural networks NN, NNVER1 and NNVER2 adhere to the predefined standard of accuracy in analyzing the driving testcases. In an embodiment, the predefined standard of accuracy is the required accuracy expected from the neural networks.

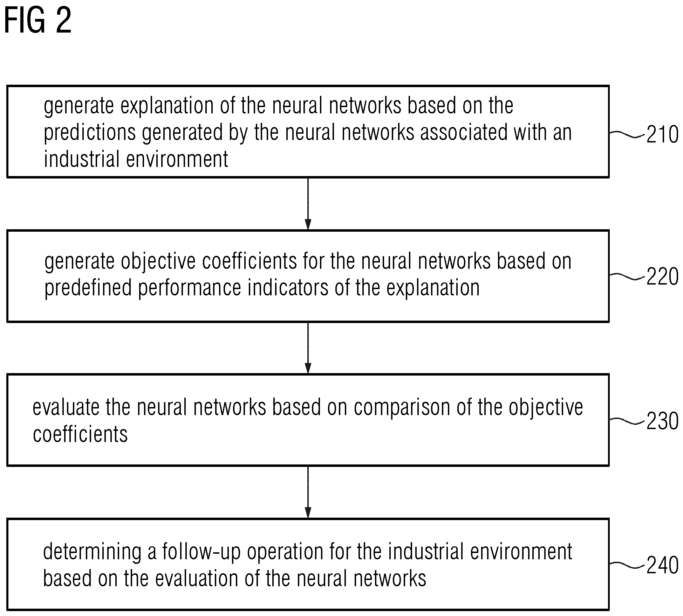

A person skilled in the art will appreciate that the autonomous vehicle is only an example, the present invention applies to multiple industrial environments. FIG 2 illustrates a flow diagram indicating method steps of a method for evaluating neural networks associated with the industrial environment such as the autonomous vehicle 140, according to an embodiment of the present invention. The description of the method steps includes specific examples explaining the operation of the invention and should not be interpreted as limiting examples.

The method begins at step 210 with generation of explanation of the neural networks. The neural networks generate predictions based on the operations in the industrial environment. The explanation comprises at least one of sensitivities, heatmaps and highlights of the predictions generated by the neural networks.

In an embodiment, the at step 210 testcases associated with the industrial environment may be defined to evaluate the neural networks. Alternatively, at step 210 the test-cases associated with the industrial environment may be received from a test-case database. The test-cases are input data to the neural networks and include an image data, an audio data, a textual data and/or a video data-stream that are input to the neural networks and an explanation module to generate the explanation. For example, test-cases include camera feed from the buildings in the building automation environment. The camera feed may be used to determine occupancy in the buildings.

As used herein, the explanation refers to a result of the analysis of the input data and their impact on the predictions generated by the neural networks. The explanations can be in the form of heat maps, highlights sensitivities that explain which aspects of the input data have mostly contributed to the predictions. In an embodiment, the explanation may be generated through back propagation of the neural networks.

To generate the explanations, step 210 may include determining a set of features of the input data and associated contribution to the prediction generated by the neural networks. The step 210 may further include determining significant features from the set of features based on higher contribution to the predictions. For example, the method may include determining significant features in the building image that have contributed to the predicted building occupancy generated by the neural networks employed by the building automation system. In the present invention the significant features may be determined based on sensitivity analysis, heat map generation and/or highlight generation. A combination of one or more of the significant features is used to generate the explanation.

The generated explanation for the predictions of the neural networks may be in multiple formats such as, an image, a plotted graph and the like. In an embodiment, the explanation may include a visual representation of the significant features. For example, a pixel map representing pixel values identified from the input data that have contributed to the predictions generated by the neural networks. In another embodiment, the step 210 may include simulating operation of the neural networks using the at least one neural network by inputting a section of the input data to the at least one neural network; and generating the explanation of the neural networks based on the simulation. In other words, the explanation may be generated using a lower order neural network that analyses a section of the input data to determine the behavior of the neural networks.

Step 220 includes generating objective coefficients for the neural networks based on predefined performance indicators of the explanation. The step 220 may include determining the performance indicators associated with the industrial environment to evaluate the explanation of the neural networks. In an embodiment, the performance indicators may include accuracy of the prediction generated by the neural networks in comparison with the input data. For example, the performance indicators may include expected or desired blur coefficients and/or pixel values also referred as a threshold blur coefficient/pixel value of the explanation. The image analysis technique may be used to determine the actual blur coefficients/pixel values (referred as objective coefficients).

At step 230, the neural networks are evaluated based on comparison of the objective explanation coefficients. Further, the step 230 may include comparing the explanation in the form of visual representations based on the blur coefficient and/or pixel values.

At step 240, a follow-up operation for the industrial environment is determined based on the evaluation of the neural networks. The step 240 may include determining what follow-up operation needs to be performed to mitigate deficiencies in the neural networks determined from the evaluation. The follow-up operation may be to identify deficiency in performance of the autonomous operations in the industrial environment. Accordingly, the method may include identifying the deficiency in performance. In furtherance, the method may include generating a new neural network version to mitigate the deficiency in performance.

The present invention is directed to multiple industrial environments where neural networks may be used as black box algorithms without the inner logic being exposed. This challenge also exists in multiple areas of neural network evaluation.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be applied to system/apparatus claims.

## Claims

1. A method for evaluating one or more neural networks associable with an industrial environment (140), wherein the neural networks are configurable to enable autonomous operations in the industrial environment (140), the method comprising:
generating explanation (134) for the neural networks, wherein the neural networks generate predictions based on the operations in the industrial environment (140); wherein the explanation (134) comprises at least one of sensitivities, heatmaps and highlights of the predictions generated by the neural networks;
generating objective coefficients for the neural networks based on predefined performance indicators of the explanation (134) ;
evaluating the neural networks based on comparison of the objective explanation (134) coefficients; and
determining a follow-up operation for the industrial environment (140) based on the evaluation of the neural networks.

2. The method according to claim 1, further comprising:
defining testcases associated with the industrial environment (140) to evaluate the neural networks, wherein the testcases are input data to the neural networks and wherein the input data comprises at least one of an image data, an audio data, a textual data and a video data-stream that are input to the neural networks and an explanation (134) module to generate the explanation (134).

3. The method according to one of the preceding claims, wherein generating explanation (134) of the neural networks comprises:
determining a set of features of the input data and associated contribution to the prediction generated by the neural networks; and
determining significant features from the set of features based on higher contribution to the predictions, wherein the explanation (134) include a visual representation of the significant features.

4. The method according to one of the preceding claims, determining a set of features of the input data and associated contribution to the prediction comprises:
simulating operation of the neural networks using the at least one neural network by inputting a section of input data to the at least one neural network; and
generating the explanation (134) of the neural networks based on the simulation.

5. The method according to one of the preceding claims, further comprising:
determining the performance indicators associated with the industrial environment (140) to evaluate the explanation (134) of the neural networks, wherein the performance indicators are defined using image analysis of the explanation (134).

6. The method according to one of the preceding claims, wherein determining a follow-up operation, comprises:
identifying deficiency in performance of the operations based on the evaluation;
generating a new neural network version to mitigate the deficiency.

7. The method according to one of the preceding claims, wherein the industrial environment comprises autonomous vehicles (140) with autonomous driving assistance systems, the method comprises:
providing driving test-cases (132) to neural networks employed in the autonomous driving assistance systems to predict driving environment of the autonomous vehicles;
determining significant features in the driving testcases that have contributed to the predicted driving environment generated by the neural networks, wherein the significant features are determined using at least one of sensitivity analysis, heatmap generation and highlight generation and wherein the explanation (134) for the driving test-cases and the predicted driving environment includes one or more significant features; and
analyzing quality of the generated explanation (134) with the significant features using image analysis of the explanation (134).

8. The method according to claim 7, wherein analyzing the quality of the significant features using image analysis of the explanation (134), comprises:
generating visual representations of the significant features for each of the neural networks;
determining at least one of blur coefficient and pixel values for the visual representations using image analysis techniques; and
comparing the visual representations based on at least one of the blur coefficient and pixel values.

9. The method according to claim 7, further comprising:
evaluating the neural networks based on the analysis of the quality of the significant features to confirm whether the neural networks adhere to a predefined standard of accuracy in analyzing the driving testcases.

10. The method according to claim 7, further comprising:
evaluating the neural networks based on the analysis of the significant features to identify a suitable neural network among the neural networks, wherein the suitable neural network is capable of analyzing the driving testcases with a higher order of accuracy.

11. An apparatus for evaluating one or more neural networks associable with an industrial environment (140), the apparatus comprising:
a firmware (120) comprising:
an explanation module (122) configured to generate explanation (134) for predictions generated using the neural networks;
an analysis module (124) configured to analyze the explanation (134) based on performance indicators associated with the industrial environment (140); and
an evaluation module (126) configured to evaluate the neural networks using the explanation (134) and the performance indicators.

12. The apparatus according to claim 11 wherein the firmware is configured to perform one or more method steps according to claims 1 to 10.

13. A system for evaluating one or more neural networks associable with an industrial environment (140), the system comprising a server configured to coordinate execution of one or more the method steps according to claims 1 to 10 executable in a distributed computing environment.

14. A computer readable medium having machine-readable instructions stored therein, which when executed by a processing unit, cause the processing unit to perform a method according to claims 1 to 10.
